# EUROPÄISCHE PATENTSCHRIFT

(11) **EP 3 693 143 B1**
(45) Veröffentlichungstag und Bekanntmachung des Hinweises auf die Patenterteilung: **20.10.2021**
(21) Anmeldenummer: 19020060.0
(22) Anmeldetag: 08.02.2019
(51) Int. Cl.: B27B 5/22, B23D 57/00

(54) **WIPPKREISSÄGE**
TILTING CIRCULAR SAW
SCIE CIRCULAIRE À BERCEAU BASCULANT

(43) Veröffentlichungstag der Anmeldung: 12.08.2020
(73) Patentinhaber: Scheppach Fabrikation von Holzbearbeitungsmaschinen GmbH, 89335 Ichenhausen (DE)
(72) Erfinder: BINDHAMMER, Markus, 86316 Friedberg (DE); HEIMBROCK, Markus, 89335 Ichenhausen (DE)
(74) Vertreter: Patentanwälte Munk

(56) Entgegenhaltungen:
- EP-A2- 0 071 902
- DE-U1- 8 327 078

## Beschreibung

Die Erfindung betrifft eine Wippkreissäge gemäß dem Oberbegriff des Anspruchs 1.

Gattungsgemäße Wippkreissägen sind beispielsweise den beiden eigenen Schutzrechten DE 20 2010 011 450 U1 und DE 10 2011 117 521 B3 zu entnehmen. Derartige Sägen dienen zum Ablängen von Brennholz oder dergleichen und weisen ein mit liegender Achse an einem Gestell drehbar und ortsfest aufgenommenes Sägeblatt auf, dass mit einem Elektromotor antreibbar ist. An dem Gestell ist dabei eine Wippe mit einem Werkstückträger bzw. einem Schnittgutaufnahmekanal angelenkt, so dass nach Einschieben von Schnittgut beispielsweise in Form von mitteldicken Ästen, das sich dann parallel zur Rotationsachse des Sägeblatts erstreckt, der Schnittgutaufnahmekanal samt enthaltenem Schnittgut in Richtung zum Sägeblatt hin verschwenkt werden kann und ein für den Bediener sicherer Schnitt durch das Schnittgut hindurch erfolgt. Derartige Wippkreissägen haben sich in der Praxis bereits vielfach bewährt.

Bei Kappsägen, bei denen anstatt eines an einer Wippe aufgenommenem Schüttgutkanals und einem feststehend angeordneten Sägeblatt ein wippbetätigbares Sägeblatt vorgesehen ist, ist es bereits bekannt, die Säge mit einem zusammenlegbaren und fahrbaren Sägetisch auszustatten, um mit der Säge im Arbeitseinsatz mobil zu sein, siehe beispielsweise die US-Patentschrift US 6,530,583 B1.

Weiterhin bekannt sind Sägen, die zur Variation der Schnitthöhe einen auf einem ausfahrbaren Scherengestell montierten Sägetisch aufweisen. So zeigt beispielsweise die chinesische Patentanmeldung CN 107511530 A1 eine Sägevorrichtung, bei der der Sägetisch auf einem als Nürnberger Schere ausgebildeten Gestell montiert ist. Als Nürnberger Schere werden Gelenkketten bezeichnet, die aus mehreren gekreuzten Scherenhebeln bestehen und beispielsweise bei Hubarbeitsbühnen zum Einsatz kommen.

Die EP0071902 A2 offenbart eine Wippkreissäge nach dem Oberbegriff des Anspruchs 1.

Ausgehend vom gattungsgemäßen Stand der Technik ist es Aufgabe der vorliegenden Erfindung, eine Wippkreissäge derart weiterzubilden, dass sie sich für breitere Anwendungsfelder und Benutzerkreise eignet.

Diese Aufgabe wird mit den Merkmalen des Anspruchs 1 gelöst.

Eine erfindungsgemäße Wippkreissäge hat ein Gestell, an dem ein Sägeblatt stationär und um eine vorzugsweise horizontale Rotationsachse drehbar aufgenommen ist und an dem ein Drehantrieb für das Sägeblatt angebracht ist. Weiterhin umfasst die Wippkreissäge eine Wippe mit einem an einem Ausleger oberseitig angebrachten Schnittgutaufnahmekanal. An einer Lageranordnung ist der Ausleger dabei unterseitig um eine zur Rotationsachse parallele Achse schwenkbar unterhalb der Rotationsachse am Gestell angebracht, so dass der Schnittgutaufnahmekanal zwischen einer Sägestellung und einer Schnittguteinlegestellung zum Sägeblatt hin und vom Sägeblatt weg schwenkbar ist.

Die erfindungsgemäße Wippkreissäge zeichnet sich dabei dadurch aus, dass das Gestell als Nürnberger Schere mit parallel zur Rotationsachse verlaufenden Gelenkachsen ausgebildet ist und eine lösbare Arretiereinrichtung aufweist, um das Gestell in einer aufgerichteten Arbeitsstellung zu arretieren oder in eine zusammengefaltete Transportstellung absinken zu lassen. Die Lageranordnung, mit der der Ausleger an dem Gestell angebracht ist, ist dabei lösbar, um die in der Arbeitsstellung mit ihrem Ausleger an das Gestell angelenkten Wippe nach dem Lösen der Lageranordnung und den anschließenden Lösen der Arretiereinrichung auf das in die Transportstellung zusammengesunkene Gestell aufzulegen. Das Gestell und die Wippe sind dabei geometrie- und abmessungsmäßig so aufeinander abgestimmt, dass ein die Wippkreissäge in der Transportstellung einschließendes, quaderförmiges Packvolumen kleiner ist als es ein die Wippkreissäge in der Arbeitsstellung einschließendes, quaderförmiges Packvolumen wäre.

Aufgrund des kleineren Packmaßes im Transportzustand bei aufgelegter Wippe ergeben sich somit nicht nur Vorteile in der Lagerung der Wippkreissäge beim Endanwender, sondern ebenfalls in der Lagerhaltung im Vertrieb sowie beim Transport vom Hersteller zu den einzelnen Handelsstufen.

Weitere vorteilhafte Weiterbildungen sind Gegenstand der Unteransprüche.

So ist es im Sinne der für den Einsatzzweck einer Wippkreissäge nötigen Robustheit bei gleichzeitig leichter Bauweise vorteilhaft, wenn das Gestell zwei über Querträger miteinander verbundene Scherenbeine aufweist, die jeweils als Doppelschere ausgebildet sind, also jeweils zwei untere Scherenhebel und zwei oberseitig daran angelenkte, obere Scherenhebel aufweisen. Der Ausleger kann dann in der Arbeitsstellung zwischen den beiden Scherenhebeln aufgenommen sein oder die beiden Scherenbeine außenseitig umfassen oder an einem der beiden Scherenbeine innen und am anderen Scherenbein außen angebracht sein, wobei der Ausleger wiederum vorteilhaft zwei über zumindest einen Querholm und den Schnittgutaufnahmekanal verbundene Auslegerholme aufweist, so dass sich auch diesbezüglich eine leichte Bauweise bei hoher Robustheit ergibt.

Die Arretiereinrichtung kann dabei zumindest an einem, vorzugsweise an jedem der Scherenbeine eine die beiden unteren Scherenhebel in der Arbeitsstellung miteinander verbindenden und fixierenden Arretierriegel umfassen, der mit seinen beiden Enden jeweils auf einer am zugeordneten unteren Scherenhebel angebrachten Riegelachse aufgenommen ist und so ein Zusammenfalten des in Arbeitsstellung aufgerichteten Gestells verhindert.

Vorteilhaft ist dabei das eine Ende des Arretierhebels an dem einen der beiden vorteilhaft unteren Scherenhebel - eine Anbringung des Arretierhebels an den beiden oberen Scherenhebel des jeweiligen Scherenbeins wäre ebenfalls denkbar - so gestaltet, dass der Arretierriegel daran ortsfest, aber drehbar aufgenommen ist, beispielsweise indem die Riegelachse als Schraubbolzen ausgebildet ist und der Arretierriegel ein entsprechendes Auge aufweist, mit dem er drehbar auf dem Schraubbolzen ortsfest gehalten ist. Die dem anderen Ende des Arretierriegels zugeordnete zweite Achse kann dann am entsprechenden, anderen Scherenhebel entnehmbar und beispielsweise mit einem Sicherungssplint gegen Entnehmen gesichert am dortigen Scherenhebel angebracht sein.

Dabei lässt sich das Gestell nicht nur in der aufgerichteten Arbeitsstellung sondern auch in der zusammengesunkenen Transportstellung arretieren, wenn zur Fixierung des Arretierriegels an der zweiten - abnehmbaren - Riegelachse neben einer Aufnahme für die Riegelachse in der Arbeitsstellung eine weitere Aufnahme für die Riegelachse in Transportstellung vorgesehen ist. Als Aufnahme kann dabei beispielsweise eine Lasche an dem jeweiligen Scherenhebel vorgesehen sein, die mit einer entsprechenden, als Achslager dienenden Bohrung versehen ist. Es wäre jedoch auch denkbar, die beiden Achslager als zwei nebeneinander den Scherenhebel durchdringende Bohrungen auszubilden.

Weiterhin vorteilhaft ist ein Dämpfer vorgesehen, welcher die Wippe in Richtung vom Sägeblatt weg vorspannt. Gerät der Schnittgutaufnahmekanal außer Handhabe des Bedieners, so wird somit sichergestellt, dass die Säge außer Eingriff mit dem Schnittgut kommt. Dazu kann an der Wippe, beispielsweise an einem der Auslegerholme, zumindest eine Dämpferstange angebracht sein, die ein hierfür am Gestell vorgesehenes Auge durchdringt, welches vorzugsweise an einem der oberen Scherenhebel beispielsweise an einer dort angebrachten Lasche vorgesehen ist. Um die das Auge in der Arbeitsstellung durchdringende Dämpferstange herum kann dann eine Ringfeder gelegt sein, die sich mit ihrem einen Ende an der das Auge enthaltenden Lasche abstützt und der andererseits ein wippseitiger Anschlag beispielsweise am wippseitigen Ende der Dämpferstange zugeordnet ist, an dem die Ringfeder bei Bewegung der Wippe zum Sägeblatt hin in Angriff gelangt. Die Dämpferstange kann dann wiederum mit einem Sicherungssplint hinter dem Auge am Gestell gesichert sein, so dass sich die Wippe an dieser Stelle einfach vom Gestell lösen lässt. Der Sicherheitssplint lässt sich somit als Teil der lösbaren Lageranordnung für die Wippe auffassen.

Die Lageranordnung, mit der der Ausleger schwenkbar an dem Gestell angebracht ist, verbindet dabei vorteilhaft zwei parallele, untere Scherenhebel mit dem Ausleger mit Drehfreiheitsgrad, wobei ferner zwei Auflager, beispielsweise an zwei parallelen, oberen Scherenhebeln, von der Lageranordnung umfasst sind, also beispielsweise zwei nach innen ragende Schraubbolzen, die mit Auflagerollen zum Beispiel aus Gummi versehen sind, an denen der Ausleger in Schnittguteinlegestellung des Schnittgutaufnahmekanals aufliegen kann, so dass die Schwenkbewegung der Wippe von dem Sägeblatt weg auf einen Grad beschränkt ist, der der Schnittguteinlegestellung entspricht.

Vorteilhaft für das Zersägen von Schnittgut in Armdicke oder größer ist dabei, wenn der Radius der Schwenkbewegung des Schnittgutaufnahmekanals gegenüber dem Radius des Sägeblatts relativ groß ist, wobei dieser durch die Ergonomie des in Tischhöhe zu gestaltenden Aufbaus der Wippkreissäge beschränkt ist. Zudem sollte das Schnittgut in etwa in einem Winkel und an einer Position auf das Sägeblatt treffen, die unerwünschte, von dem Sägeblatt auf das Schnittgut und damit die Wippe und den Bediener induzierte Rückschlagkräfte vermeiden helfen. Die Rotationsachse des Sägeblatts, der potenziale Auftreffpunkt des Schnittguts und die Achse des Schnittgutkanals sollten also möglichst miteinander fluchten.

In diesem Sinne vorteilhaft ist es daher, wenn die Lageranordnung zum Anlenken des Auslegers an dem Gestell zwei von den beiden unteren Scherenhebeln, an denen der Ausleger drehbar mit dem Gestell verbunden ist, jeweils nach unten ragende Wipplagerstege aufweist, welche an ihrem unteren Enden jeweils eine der Lagerachsen tragen, an der der zugeordnete Auslegerholm angelenkt ist.

Dadurch gelingt eine Verlängerung des Auslegers und damit des Radius der Schwenkbewegung des Schnittgutaufnahmekanals zum Sägeblatt hin bei gleichzeitig relativ wenig zur Vertikalen geneigter Stellung des Auslegers bei Auftreffen des Schnittguts auf das Sägeblatt.

Zur Verbindung des Auslegers mit den beiden unteren Scherenhebeln mit Drehfreiheitsgsgrad im Winkelbereich zwischen Sägestellung und Schnittguteinlegestellung kann die Lageranordnung dabei zwei Wipplagerachsen umfassen, die beispielsweise als Schraubbolzen ausgebildet sein können und jeweils von einem der beiden parallelen unteren Scherenhebel oder Wipplagerstege nach innen ragen und dort jeweils einen der Auslegerholme des Auslegers durchdringen. Dadurch kann der Ausleger allein durch das Lösen der Schraubverbindung und Abziehen der Wipplagerachsen, gegebenenfalls noch zusätzlich durch das Lösen der Verbindung am Sicherheitssplint der Dämpferstange vom Gestell abgenommen werden. Vorteilhaft könnten alternativ zu den Schraubbolzen auch hier einfache Steckbolzen, die mit einem Sicherheitssplint gesichert werden als Wipplager verwendet werden.

Um Platz zum Auflegen des Auslegers auf das in der zusammengesunkenen Transportstellung befindliche Gestell zu schaffen ist es weiterhin vorteilhaft, wenn das Sägeblatt an einer in Rotationachsrichtung gelegenen Seite über das Gestell außen hin überkragend an dem Gestell angebracht ist, so dass oberhalb des Gestells Platz für die Auslegerholme bzw. den Ausleger ist. Weiterhin vorteilhaft kann der Drehantrieb bzw. Elektromotor zum Antrieb des Sägeblatts dabei auf der in Rotationsachsrichtung dem Gestell zugewandten Seite des Sägeblatts oberhalb des Gestells angeordnet sein, da dieser gegenüber der Ausdehnung des Sägeblatts in Radialrichtung eine relativ kleine Abmessung aufweist, so dass zum Auflegen des Auslegers bzw. der Auslegerholme unterhalb des Motors trotzdem noch genügend Platz verbleibt.

Dabei kann eine zusätzliche Fixierung des auf das Gestell im Transportzustand aufgelegten Auslegers dadurch erfolgen, dass eine den Drehantrieb und das Sägeblatt tragende Motoraufhängung eine Einschuböffnung zum Einschieben des dem Sägeblatt zugewandten Auslegerholms des Auslegers beim Auflegen der Wippe auf das in die Transportstellung zusammengesunkene Gestell aufweist.

Um das Sägeblatt herum kann dabei ferner eine Sägeblattabdeckung am Gestell angebracht sein, die auf der dem Schnittgutaufnahmekanal zugewandten Seite unterbrochen, aber ansonsten zumindest weitgehend geschlossen ist. In den Schnittgutaufnahmekanal eingelegtes Schnittgut kann dann durch Schwenkbewegung der Wippe dem Sägeblatt zugeführt werden, wobei das Sägeblatt lediglich im relevanten Sägebereich nicht von der Sägeblattabdeckung abgedeckt ist. Dadurch wird die Verletzungsgefahr beim Betätigen der Wippkreissäge verringert.

Ist dort darüber hinaus auch noch eine am Schnittgutaufnahmekanal zum Sägeblatt hin vorstehende Abdeckscheide angebracht, die die Sägeblattabdeckung zu einer vollständig oder nahezu vollständig geschlossen Sägeblatteinhausung komplementiert, also zwei Abdeckblätter aufweist, die den von der Sägeblattabdeckung freigelassenen Bereich überdecken, so wird eine noch weitergehende Minimierung des Verletzungsrisikos erreicht. Dabei ist es im Hinblick auf ein kleines Transportpackmaß besonders vorteilhaft, wenn die Länge der Abdeckscheide so auf die Höhe der Sägeblattabdeckung abgestimmt ist, dass die Abdeckscheide bei auf das in Transportstellung zusammengesunkene Gestell aufgelegter Wippe nicht nach oben über die Sägeblattabdeckung übersteht.

Weiterhin vorteilhaft ist an auf einer dem Schnittgutaufnahmekanal abgewandten Seite des Gestells gelegenen unteren Enden der entsprechenden unteren Scherenhebel ein Standfußelement angebracht, mit einem sich in Rotationsachsrichtung erstreckenden, die unteren Enden verbindenden Querträger und einer Mehrzahl davon nach unten abstehenden Standfüßen.

Weiterhin kann an auf einer dem Schnittgutaufnahmekanal zugewandten Seite des Gestells gelegenen unteren Enden der entsprechenden unteren Scherenhebel eine Mehrzahl von Rädern angebracht sein.

Insbesondere bei einem an einer in Rotationsachsrichtung gelegenen Seite über das Gestell nach außen hin überkragenden Sägeblatt und daran anschließendem Drehmotor ist es dabei im Sinne einer hohen Kippfestigkeit günstig, wenn das Gestell ein Standfußelement aufweist, das auf Seiten des Sägeblatts nach außen hin über das Scherengestell auskragt und auf einer dem Gestell abgewandten Seite des Sägeblatts einen Standfuß aufweist. Dies gilt auch in Bezug auf die Räder. Hier kann eines der Räder auf der dem Gestell abgewandten Seite des Sägeblatts angeordnet sein, wozu beispielsweise der dieses Rad tragende untere Scherenhebel nach außen hin abgewinkelt verlaufen kann.

Weitere Merkmale und Vorteile der Erfindung werden an Hand der in den Figuren gezeigten Ausführungsform der Erfindung näher erläutert. Es zeigen:
- Figur 1: eine perspektivische Seitenansicht der Wippkreissäge gemäß einer Ausführungsform der Erfindung in Arbeitsstellung;
- Figur 2: eine weitere perspektivische Seitenansicht der in Figur 1 gezeigten Wippkreissäge in Arbeitsstellung;
- Figur 3: eine perspektivische Seitenansicht der in den Figuren 1 und 2 gezeigten Wippkreissäge in Transportstellung bei aufgelegter Wippe;
- Figur 4: eine weitere perspektivische Seitenansicht der in den Figuren 1 bis 3 gezeigten Wippkreissäge in Transportstellung bei aufgelegter Wippe; und
- Figur 5: eine perspektivische Seitenansicht des Gestells der in den Figuren 1 bis 4 gezeigten Wippkreissäge im zusammengesunkener Transportstellung.

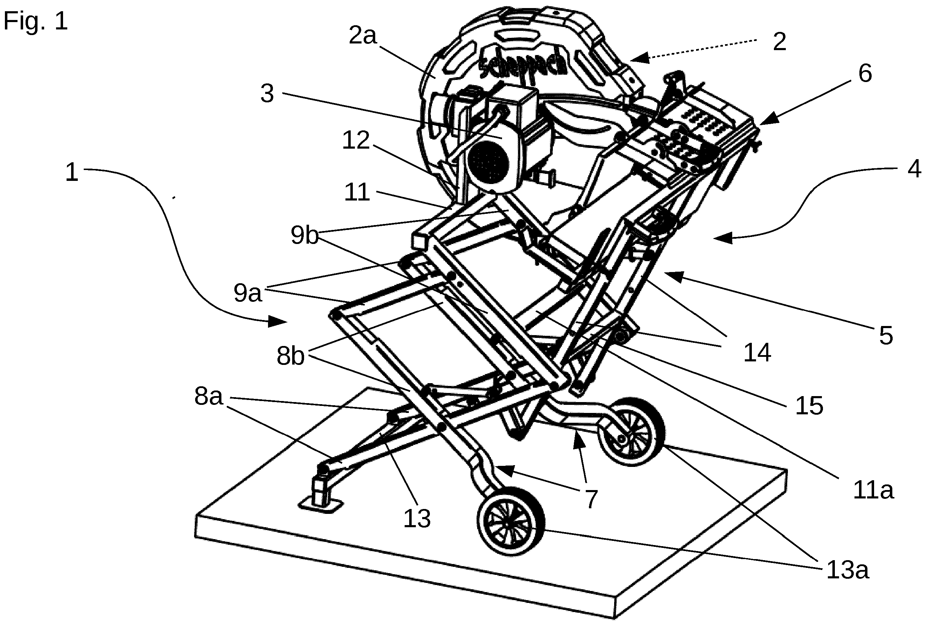

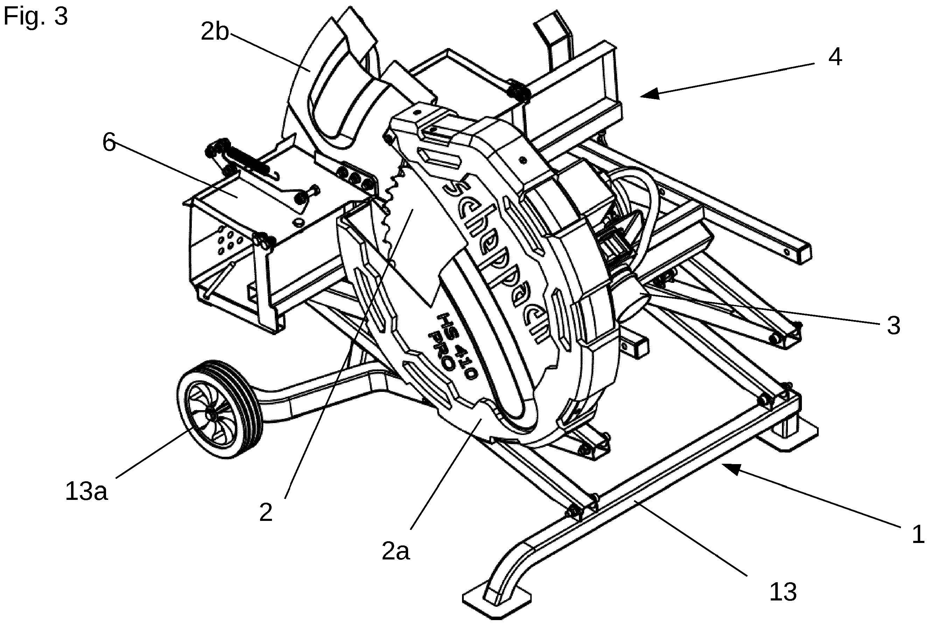

Die Fig. 1 zeigt eine Wippkreissäge mit einem Gestell 1, an dem ein unter einer Sägeblattabdeckung 2a nicht zuerkennendes Sägeblatt 2 (insoweit wird auf die Fig. 3 bis 5 verwiesen), sowie dessen Drehmotor 3 mit liegender Rotationsachse ortsfest angebracht sind. Weiterhin ist an dem Gestell 1 eine Wippe 4 angebracht, mit einem zum Einlegen von Schnittgut dienenden Schnittgutkanal 6 und einem Ausleger 5, welcher an dem Gestell 1 wippbewegbar befestigt ist und den Schnittgutkanal 6 trägt.

Das Gestell 1 hat dabei insgesamt einen nach Art einer Nürnberger Schere aufrichtbaren und zusammenlegbaren Aufbau, mit zwei Scherenbeinen 7, die jeweils als Doppelschere zwei untere Scherenhebel 8a,8b und zwei obere Scherenhebel 9a,9b aufweisen und mittels Querträger 11,11a miteinander verstrebt sind.

An dem oberen Querträger 11 ist dabei ein nach oben ragender Motorträger 12 aufgeschweißt, welcher den Drehmotor 3 und das damit verbundene Sägeblatt 2 trägt. An den beiden unteren Scherenhebeln 8a, deren untere Enden auf die dem Schnittgutaufnahmekanal 6 abgewandte Seite zeigen, ist ferner unterseitig ein Standfußelement 13 angeschraubt, welches zwei über einen Querträger verbundene Standfüße aufweist, wobei sich der Querträger in Richtung parallel zur liegenden Rotationsachse des Sägeblatts 2 erstreckt. An den beiden unteren Scherenhebeln 8b, deren untere Enden zur Seite des Schnittgutaufnahmekanals 6 hinweisen sind dagegen zwei Räder 13a angebracht, um ein Bewegen der Wippkreissäge zu erleichtern.

Der Ausleger 5 weist zwei über einen Querholm 15 und den Schnittgutaufnahmekanal 6 miteinander verbundene Auslegerholme 14 auf, die an dem Gestell 1 angelenkt sind.

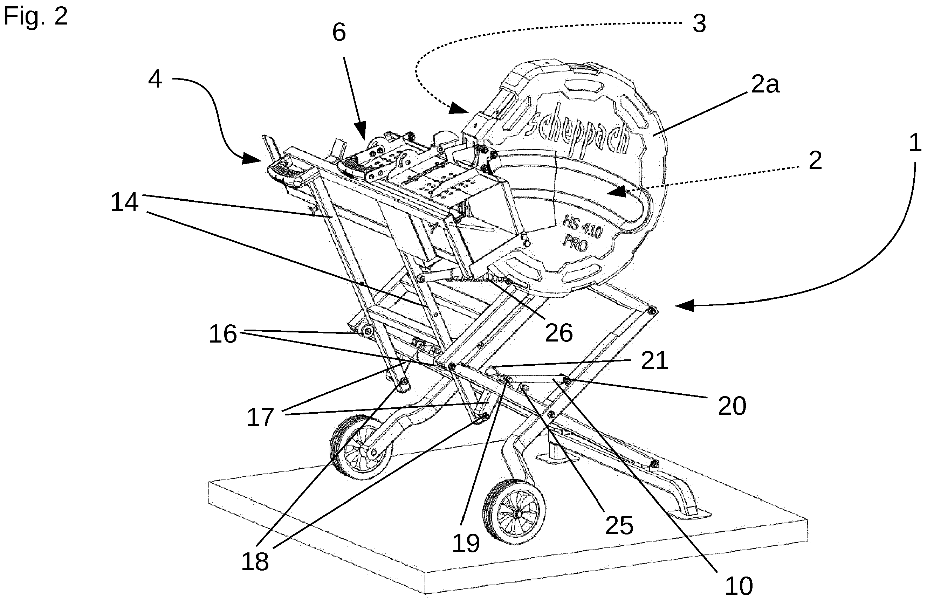

Die Anlenkpunkte befinden sich dabei am unteren Ende von zwei von den beiden unteren Scherenhebeln 8a oberhalb eines unteren Scherengelenks nach unten ragenden Wipplagerstege 17, die in Fig. 2 eingezeichnet sind. Zum wippbaren Befestigen der Wippe 4 an dem Gestell 1 dabei eine insgesamt mit 16,17,18 bezeichnete Lageranordnung vorgesehen, die zum Einen die Wipplagerstege 17 und an deren unteren Enden eingeschobenen Lagerachsen 18 umfasst, auf welche Lagerachsen 18 die beiden Auslegerholme 14 drehbar aufgenommen sind und welche Lagerachsen 18 als entnehmbare Schraubbolzen gestaltet sind. Zum Anderen umfasst die Lageranordnung 16,17,18 zwei an den Achsen der mittleren Scherengelenke zwischen den unteren Scherenhebeln 8a und den oberen Scherenhebeln 9b nach innen ragende Auflager 16, die als auf die nach innen ragenden Gelenkachsen aufgeschobene Auflagerrollen 16 aus Gummi ausgestaltet sind. Die Auflagerrollen 16 begrenzen somit die Wippbewegung in Richtung vom Sägeblatt 2 weg auf eine Stellung, die zum Einlegen von Schnittgut dient und in der der Schnittgutkanal 6 nicht vom Sägeblatt 2 durchdrungen ist.

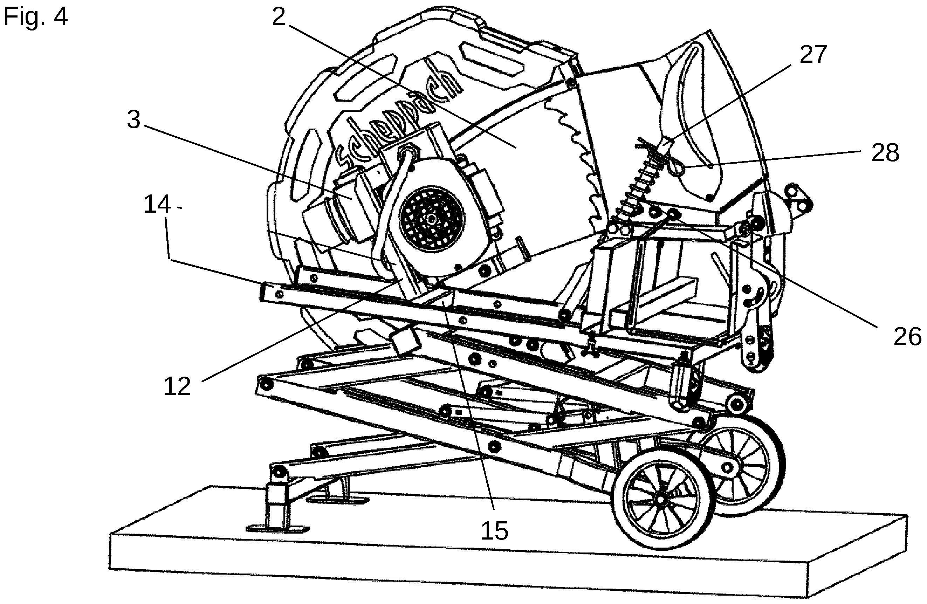

Zum Abnehmen der Wippe 4 müssen also lediglich die beiden Auslegerholme 14 außer Eingriff mit dem Lagerachsen 18 gebracht werden und eine zusätzliche Verbindung der Wippe 4 mit dem Gestell 1 an einer insbesondere in der Fig. 4 gut zu erkennenden Dämpferstange 27 gelöst werden.

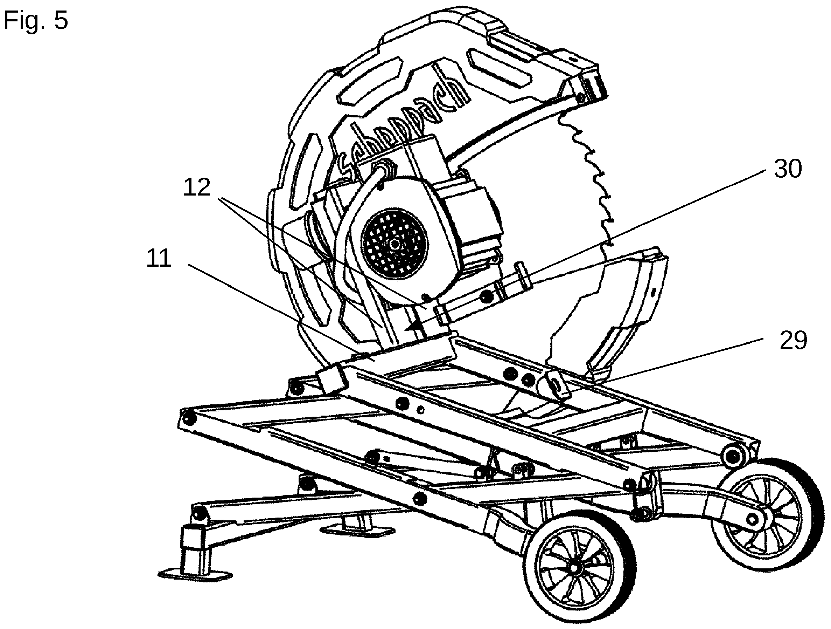

Die Dämpferstange 27 ist dabei mit ihrem einen Ende an einem der beiden Auslegerholme 14 angebracht und ihrem anderen Ende in ein in der Fig. 5 zu erkennendes Auge an einer Lasche 29 eines der beiden parallelen oberen Längsholme 9b des Gestells 1 eingesteckt und dort wiederum mit einem in Fig. 4 bezeichneten Sicherungssplint 28 gesichert. Um die Dämpferstange 27 ist eine Ringfeder 26 herumgelegt die auch in Fig. 2 bezeichnet ist und sich an ihrem einen Ende an der Lasche 29 gestellseitig und an ihrem anderen Ende an einem entsprechenden Anschlag an der Dämpferstange wippseitig abstützt und so die Wippe beim Sägen vom Sägeblatt 2 weg vorspannt.

Nach dem Abnehmen der Wippe 4 von dem Gestell 1 kann das Gestell 1 aus seiner in den Fig. 1 und 2 gezeigten, aufgerichteten Arbeitsstellung in seine in den Fig. 3 bis 5 gezeigten Transportstellung zusammengefaltet werden.

Hierzu muss eine Arretiereinrichtung 10,19,20,21 gelöst werden, die das Gestell in der aufgerichteten Arbeitsstellung hält. Die Arretiereinrichtung 10,19,20,21 umfasst dabei einen Arretierriegel 10, wie insbesondere der Fig. 2 zu entnehmen ist, der mit seinen beiden Enden jeweils auf einer am zugeordneten unteren Scherenhebel 8a,8b angebrachten Riegelachse 19,20 aufgenommen ist. In der an den beiden unteren Scherenhebel 8a,8b angebrachten Stellung der Arretierstange 10 wird somit ein Zusammensinken des Gestells 1 verhindert.

Eine der beiden Riegelachsen 19,20, nämlich die am unteren Scherenhebel 8a angebrachte Riegelachse 19 ist dabei als entnehmbarer Bolzen in ein an einer Lasche am unteren Scherenhebel 8a ausgebildetes Lagerauge eingesteckt und mit einem Sicherungssplint 21 gegen herausziehen gesichert. Wird - nach Abnehmen der Wippe 4 - nun der Sicherungssplint 21 abgezogen und die Lagerachse 19 entnommen, so sinkt das Gestell 1 in seine Transportstellung zusammen, siehe Fig. 5.

Um die Wippkreissäge im einem eckigen über ihren Abmaßen in Arbeitsstellung relativ kompakten Transport- bzw. Packzustand zubringen, welches nur ein geringes Packvolumen bzw. eine geringe Lagerfläche benötigt, wird die abgenommene Wippe 4 auf das wie in Fig. 5 gezeigt in seine Transportstellung abgesunkene Gestell 1 aufgelegt, wie in den Fig. 3 und 4 gezeigt.

Um dabei unterhalb des Drehantriebs 3 Platz für den dort aufzulegenden Auslegerholm 14 zu schaffen weist die Motoraufhängung 12 einen in der Fig. 5 zu entnehmenden Einschubkanal bzw. Einschuböffnung 30 auf, durch die der entsprechende Auslegerholm 14 hindurch gesteckt werden kann.

Abweichungen und Modifikationen von der gezeigten Ausführungsform sind möglich, ohne den Schutzumfang der Ansprüche zu verlassen.

## Patentansprüche

1. Wippkreissäge mit
einem Gestell (1), an dem ein Sägeblatt (2) stationär und um eine vorzugsweise horizontale Rotationsachse drehbar aufgenommen ist und an dem ein Drehantrieb (3) für das Sägeblatt (2) angebracht ist, und mit einer Wippe (4), die einen an einem Ausleger (5) oberseitig angebrachten Schnittgutaufnahmekanal (6) umfasst, wobei eine Lageranordnung (16, 17, 18) vorgesehen ist, an der der Ausleger (5) unterseitig um eine zur Rotationsachse parallele Achse schwenkbar unterhalb der Rotationsachse am Gestell (1) angebracht ist, so dass der Schnittgutaufnahmekanal (6) zwischen einer Sägestellung und einer Schnittguteinlegestellung zum Sägeblatt (2) hin und vom Sägeblatt (2) weg schwenkbar ist,
**dadurch gekennzeichnet, dass**
das Gestell (1) als Nürnberger Schere mit parallel zur Rotationsachse verlaufenden Gelenkachsen ausgebildet ist und eine lösbare Arretiereinrichtung (10, 19, 20, 21) aufweist, um das Gestell (1) in einer aufgerichteten Arbeitsstellung zu arretieren oder in eine zusammengefaltete Transportstellung absinken zu lassen, und
die Lageranordnung (16, 17, 18) lösbar ist, um die in der Arbeitsstellung mit ihrem Ausleger (5) an das Gestell (1) angelenkte Wippe (4) bei gelöster Lageranordnung (16, 17, 18) auf das in die Transportstellung zusammengesunkene Gestell (1) aufzulegen, so dass
ein die Wippkreissäge in der Transportstellung einschließendes, quaderförmiges Packvolumen kleiner ist als es ein die Wippkreissäge in der Arbeitsstellung einschließendes, quaderförmiges Packvolumen wäre.

2. Wippkreissäge nach Anspruch 1, **dadurch gekennzeichnet, dass** das Gestell (1) eine Mehrzahl, vorzugsweise zwei über Querträger (11, 11a) miteinander verbundene Scherenbeine (7) aufweist, jeweils mit zwei unteren Scherenhebeln (8a, 8b) und zumindest zwei daran oberseitig gelenkig anschließenden, oberen Scherenhebeln (9a, 9b), wobei der Ausleger (5) in der Arbeitsstellung den beiden Scherenbeinen (7) vorzugsweise zwischengeordnet ist.

3. Wippkreissäge nach Anspruch 2, **dadurch gekennzeichnet, dass** die Arretiereinrichtung (10, 19, 20, 21) zumindest an einem, vorzugsweise an jedem der Scherenbeine (7) einen die beiden unteren Scherenhebel (8a, 8b) in der Arbeitsstellung fixierenden Arretierriegel (10) umfasst, der mit seinen beiden Enden jeweils auf einer am zugeordneten unteren Scherenhebel (8a, 8b) angebrachten Riegelachse (19, 20) aufgenommen ist.

4. Wippkreissäge nach Anspruch 3, **dadurch gekennzeichnet, dass** die dem einen Ende des Arretierriegels (10) zugeordnete erste Riegelachse (20) am dortigen Scherenhebel (8b) fest angebracht, beispielsweise angeschraubt oder -geschweißt ist und die dem anderen Ende des Arretierriegels (10) zugeordnete zweite Riegelachse (19) entnehmbar und beispielsweise mit einem Sicherungssplint (21) gegen Entnehmen gesichert am dortigen Scherenhebel (8a) angebracht ist.

5. Wippkreissäge nach Anspruch 4, **dadurch gekennzeichnet, dass** zur Fixierung des Arretierriegels (10) an der zweiten Riegelachse (19) in der Arbeitsstellung ein Achslager für die zweite Riegelachse (19) beispielsweise an einer Lasche an dem dortigen Scherenhebel (8a) angebracht ist, wobei zur Fixierung des Arretierriegels (10) an der zweiten Riegelachse (19) in der Transportstellung ein Transportachslager (25) für die zweite Riegelachse (19) beispielsweise an einer zweiten Lasche an dem dortigen Scherenhebel (8a) angebracht ist, so dass die beiden unteren Scherenhebel (8a, 8b) sowohl in der Arbeitsstellung als auch in der Transportstellung mittels des Arretierriegels (10) fixierbar sind.

6. Wippkreissäge nach einem der vorhergehenden Ansprüche, **dadurch gekennzeichnet, dass** der Ausleger (5) zwei über zumindest einen Querholm (15) und vorzugsweise den Schnittgutaufnahmekanal (6) verbundene Auslegerholme (14) aufweist.

7. Wippkreissäge nach einem der vorhergehenden Ansprüche, **dadurch gekennzeichnet, dass** an der Wippe (4), vorzugsweise an einem der Auslegerholme (14) zumindest eine Dämpferstange (27) angebracht ist, der ein Auge an einer an dem Gestell, vorzugsweise an einem der oberen Scherenhebeln (9a, 9b) angebrachten Lasche (29) zugeordnet ist, welches in der Arbeitsstellung von der Dämpferstange (27) durchdrungen ist und an dem sich eine um die Dämpferstange (27) gelegte Ringfeder (26) einenends abstützt, wobei dem anderen Ende der Ringfeder (26) ein wippseitiger Anschlag beispielsweise am wippseitigen Ende der Dämpferstange (27) zugeordnet ist, so dass die Wippe (4) und damit der Schnittgutaufnahmekanal (6) in seine Schnittguteinlegestellung vorgespannt ist.

8. Wippkreissäge nach einem der Anspruch 2 bis 7, **dadurch gekennzeichnet, dass** die Lageranordnung (16, 17, 18) den Ausleger (5) mit zwei parallelen Scherenhebeln (8a) der vier unteren Scherenhebel (8a, 8b) mit Drehfreiheitsgrad verbindet und zwei Auflager (16) umfasst, insbesondere zwei nach innen ragende Auflagerollen (16), an denen der Ausleger (5) in Schnittguteinlegestellung des Schnittgutaufnahmekanals (6) aufliegt.

9. Wippkreissäge nach einem der Ansprüche 2 bis 8, **dadurch gekennzeichnet, dass** die Lageranordnung (16, 17, 18) zum Anlenken des Auslegers (5) an dem Gestell (1) zwei von den beiden unteren Scherenhebeln (8a) jeweils nach unten ragende Wipplagerstege (17) aufweist, welche an ihren unteren Enden jeweils eine der Lagerachsen (18) tragen, an der der zugeordnete Auslegerholm (14) angelenkt ist.

10. Wippkreissäge nach Anspruch 8 oder 9, **dadurch gekennzeichnet, dass** die Lageranordnung (16, 17, 18) zwei Wipplagerachsen (18) umfasst, die als Schraubbolzen ausgebildet sind und jeweils von einem der beiden parallelen unteren Scherenhebel (8a) oder Wipplagerstege (17) nach innen ragen und dort jeweils einen der Auslegerholme (14) des Auslegers (5) durchdringen.

11. Wippkreissäge nach einem der vorhergehenden Ansprüche, **dadurch gekennzeichnet, dass** das Sägeblatt (2) an einer in Rotationsachsrichtung gelegenen Seite über das Gestell (1) nach außen hin überkragt, wobei der Drehantrieb (3) auf der in Rotationsachsrichtung dem Gestell (1) zugewandten Seite des Sägeblatts (3) oberhalb des Gestells (1) angeordnet ist.

12. Wippkreissäge nach Anspruch 11, **dadurch gekennzeichnet, dass** eine den Drehantrieb (3) und das Sägeblatt (2) tragende Motoraufhängung (12) auf einem oberen Querträger (11) des Gestells (1) sitzt, so dass sich die Rotationsachse des Sägeblatts oberhalb des oberen Querträgers (11) befindet, wobei die Motoraufhängung (12) eine Einschuböffnung (30) zum Einschieben des dem Sägeblatt zugewandten Auslegerholms (14) des Auslegers (5) beim Auflegen der Wippe (4) auf das in die Transportstellung zusammengesunkene Gestell (1) aufweist.

13. Wippkreissäge nach einem der vorhergehenden Ansprüche, **dadurch gekennzeichnet, dass** um das Sägeblatt (2) herum eine Sägeblattabdeckung (2a) angebracht ist, die von einer am Schnittgutaufnahmekanal (6) zum Sägeblatt (2) hin vorstehenden Abdeckscheide (2b) zu einer vollständig oder nahezu vollständig geschlossenen Sägeblatteinhausung (2a, 2b) komplementiert wird, wobei die Abdeckscheide (2b) bei auf das in die Transportstellung zusammengesunkene Gestell (1) aufgelegter Wippe (4) nicht nach oben über die Sägeblattabdeckung (2a) übersteht.

14. Wippkreissäge nach einem der Ansprüche 2 bis 13, **dadurch gekennzeichnet, dass** an auf einer dem Schnittgutaufnahmekanal (6) abgewandten Seite des Gestells (1) gelegenen unteren Enden der entsprechenden unteren Scherenhebel (8a) ein Standfußelement (13) angebracht ist, mit einem sich in Rotationsachsrichtung erstreckenden, die unteren Enden verbindenden Querträger und einer Mehrzahl davon nach unten abstehenden Standfüßen, wobei der Querträger auf Seiten des Sägeblatts (2) über das Gestell (1) und vorzugsweise auch das Sägeblatt (2) auskragt und sich einer der Standfüße auf der dem Gestell (1) abgewandten Seite des Sägeblatts (2) befindet.

15. Wippkreissäge nach einem der Ansprüche 2 bis 13, **dadurch gekennzeichnet, dass** an auf einer dem Schnittgutaufnahmekanal (6) zugewandten Seite des Gestells (1) gelegenen unteren Enden der entsprechenden unteren Scherenhebel (8b) Räder (13a) angebracht sind, wobei der auf Seiten des Sägeblatts (2) gelegene und eines der Räder (13a) tragende unteren Scherenhebel (8b) nach außen hin abgewinkelt ist, so dass sich eines der Räder (13a) auf der dem Gestell (1) abgewandten Seite des Sägeblatts (2) befindet.

## Claims

1. Rocker circular saw with
a frame (1) on which a saw blade (2) is held stationary and rotatable about a preferably horizontal axis of rotation and on which a rotary drive (3) for the saw blade (2) is mounted, and with
a rocker (4) comprising a cut material receiving channel (6), which is mounted on a top side of a cantilever (5), wherein a bearing arrangement (16, 17, 18) is provided, by which the cantilever (5) is mounted on the underside on the frame (1) so as to be pivotable about an axis extending below and in parallel to the axis of rotation, so that the cut material receiving channel (6) is pivotable towards the saw blade (2) and away from the saw blade (2) between a sawing position and a cut material insertion position,
**characterized in that**
the frame (1) is designed as lazy tongs (Nuremberg scissors) with joint axes extending in parallel to the axis of rotation, wherein the frame (1) comprises a releasable locking device (10, 19, 20, 21) for locking the frame (1) in an erected working position or for allowing it to sink into a folded transport position, and wherein
in the working position, the rocker (4) is hinged by its cantilever (5) to the frame (1), and the bearing arrangement (16, 17, 18) is releasable in order to place the rocker (4), with the bearing arrangement (16, 17, 18) released, on the frame (1) sunken into its transport position, so that
a cuboidal packing volume enclosing the rocker circular saw in the transport position is smaller than a cuboidal packing volume enclosing the rocker circular saw in the working position.

2. Rocker circular saw according to claim 1, **characterized in that** the frame (1) has a plurality of, preferably two, scissor legs (7) connected to one another via cross bars (11, 11a), each of the scissor legs (7) comprising two lower scissor levers (8a, 8b) and at least two upper scissor levers (9a, 9b) hinged thereto at the top, wherein the cantilever (5), in the working position, is preferably arranged between the two scissor legs (7).

3. Rocker circular saw according to claim 2, **characterized in that** the locking device (10, 19, 20, 21) comprises, at least on one, preferably on each of the scissor legs (7), a locking bolt (10), which fixes the two lower scissor levers (8a, 8b) in the working position and which is received with each of its two ends on a locking axle (19, 20) mounted on the associated lower scissor lever (8a, 8b).

4. Rocker circular saw according to claim 3, **characterized in that** the first locking axle (20) associated with one end of the locking bolt (10) is fixedly attached, for example screwed or welded, to one of the scissor levers (8b), and the second locking axle (19) associated with the other end of the locking bolt (10) is removable and is attached to another one of the scissor levers (8a) and is secured against removal, for example by a safety split pin (21).

5. Rocker circular saw according to claim 4, **characterized in that** for fixing the locking bolt (10) on the second locking axle (19) in the working position, an axle bearing for the second locking axle (19) is mounted on the respective scissor lever (8a), for example on a lug there, wherein for fixing the locking bolt (10) on the second locking axle (19) in the transport position, a transport axle bearing (25) for the second locking axle (19) is mounted on the respective scissor lever (8a), for example on a second lug there, so that the two lower scissor levers (8a, 8b) can be fixed both in the working position and in the transport position by means of the locking bolt (10).

6. Rocker circular saw according to one of the preceding claims, **characterized in that** the cantilever (5) has two cantilever bars (14) connected by at least one transverse bar (15) and preferably by the cut material receiving channel (6).

7. Rocker circular saw according to any of the preceding claims, **characterized in that** at least one damper rod (27) is mounted on the rocker (4), preferably on one of the cantilever bars (14), wherein an eye on a lug (29) mounted on the frame, preferably on one of the upper scissor levers (9a, 9b) is associated to the damper rod (27), wherein the eye in the working position is penetrated by the damper rod (27) and wherein an annular spring (26) laid around the damper rod (27) is supported with its one end at the eye, wherein a rocker-side stop, for example at the rocker-side end of the damper rod (27), is associated with the other end of the annular spring (26), so that the rocker (4) and thus the cut material receiving channel (6) is urged into its cut material insertion position.

8. Rocker circular saw according to any one of claims 2 to 7, **characterized in that** the bearing arrangement (16, 17, 18) connects the cantilever (5) to two parallel scissor levers (8a) of the four lower scissor levers (8a, 8b) with a degree of rotational freedom and comprises two supports (16), in particular two inwardly projecting support rollers (16), on which the cantilever (5) rests in the cut material insertion position of the cut material receiving channel (6).

9. Rocker circular saw according to any one of claims 2 to 8, **characterized in that** the bearing arrangement (16, 17, 18) for hinging the cantilever (5) to the frame (1) comprises two rocker bearing bars (17), each projecting downwards from one of the two lower scissor levers (8a), which at their lower ends each support one of the bearing axles (18) to which the associated cantilever bar (14) is hinged.

10. Rocker circular saw according to claim 8 or 9, **characterized in that** the bearing arrangement (16, 17, 18) comprises two rocker bearing shafts (18) which are designed as screw bolts and each of the two rocker bearing shafts (18) projects inwards from one of the two parallel lower scissor levers (8a) or the rocker bearing bars (17), to penetrate one of the cantilever bars (14) of the cantilever (5) there.

11. Rocker circular saw according to one of the preceding claims, **characterized in that** the saw blade (2) projects outwards beyond the frame (1) on a side located in a direction of the axis of rotation, wherein the rotary drive (3) is arranged above the frame (1) on the side of the saw blade (3) facing the frame (1) in the direction of the axis of rotation.

12. Tilting circular saw according to claim 11, **characterized in that** a motor suspension (12) carrying the rotary drive (3) and the saw blade (2) is seated on an upper cross member (11) of the frame (1) so that the axis of rotation of the saw blade is located above the upper cross member (11), wherein the motor suspension (12) has an insertion opening (30) for inserting that cantilever bar (14) of the cantilever (5), which is adjacent to the saw blade when the rocker (4) is placed on the frame (1) sunken into the transport position.

13. Rocker circular saw according to one of the preceding claims, **characterized in that** a saw blade cover (2a) is mounted around the saw blade (2), wherein the saw blade cover (2a) is complemented by a cover sheath (2b) projecting towards the saw blade (2) at the cut material receiving channel (6) to a completely or almost completely closed saw blade housing (2a, 2b), wherein the cover sheath (2b) does not project upwards beyond the saw blade cover (2a) when the rocker (4) is placed on the frame (1) sunken into the transport position.

14. Rocker circular saw according to any one of claims 2 to 13, **characterized in that** a pedestal element (13) is attached to lower ends of the corresponding lower scissor levers (8a) located on a side of the frame (1) facing away from the cut material receiving channel (6), the pedestal element (13) having a cross bar extending in the direction of the axis of rotation and connecting the lower ends and the pedestal element (13) having a plurality of feet projecting downwards from the cross bar, wherein the cross bar projects on the side of the saw blade (2) over the frame (1) and preferably also the saw blade (2), and wherein one of the feet being located on the side of the saw blade (2) facing away from the frame (1).

15. Rocker circular saw according to one of claims 2 to 13, **characterized in that** wheels (13a) are mounted on lower ends of the corresponding lower scissor levers (8b) located on a side of the frame (1) facing the cut material receiving channel (6), wherein the lower scissor lever (8b), which is located on the side of the saw blade (2) and carries one of the wheels (13a), is angled outwards so that one of the wheels (13a) is located on the side of the saw blade (2) facing away from the frame (1).

## Revendications

1. Scie circulaire à berceau basculant comprenant
un bâti (1) sur lequel une lame de scie (2) est reçue de manière stationnaire et de manière à pouvoir tourner autour d'un axe de rotation de préférence horizontal et sur lequel est monté un mécanisme d'entraînement rotatif (3) pour la lame de scie (2), ainsi qu'
une bascule (4) qui comprend un canal de réception de produit de sciage (6) qui est monté côté supérieur sur une flèche (5), dans lequel un ensemble de support (16, 17, 18) est prévu sur lequel la flèche (5) est disposée côté inférieur de manière à pouvoir pivoter autour d'un axe parallèle à l'axe de rotation, au-dessous de l'axe de rotation sur le bâti (1), de sorte que le canal de réception de produit de sciage (6) puisse pivoter entre une position de sciage et une position de chargement de produit de sciage vers la lame de scie (2) et dans la direction opposée à la lame de scie (2),
**caractérisée par le fait que**
le bâti (1) est conçu en tant que ciseaux de Nuremberg avec des axes d'articulation parallèles à l'axe de rotation et comprend un dispositif d'arrêt (10, 19, 20, 21) apte à être débloqué et destiné à arrêter le bâti (1) dans une position de travail verticale ou à le faire abaisser dans une position de transport pliée, et
ledit ensemble de support (16, 17, 18) peut être débloqué afin de placer la bascule (4) dont la flèche (5) est articulée sur le bâti (1) en position de travail, lorsque ledit ensemble de support (16, 17, 18) est débloqué, sur le bâti (1) replié dans la position de transport de sorte qu'
un volume dimensionnel en forme de parallélépipède rectangle qui enferme la scie circulaire à berceau basculant en position de transport serait plus petit qu'un volume dimensionnel en forme de parallélépipède rectangle qui enferme la scie circulaire à berceau basculant en position de travail.

2. Scie circulaire à berceau basculant selon la revendication 1, **caractérisée par le fait que** le bâti (1) comprend une pluralité, de préférence deux branches de ciseaux (7) reliées entre elles par l'intermédiaire de traverses (11, 11a), chacune avec deux leviers de ciseaux inférieurs (8a, 8b) et au moins deux leviers de ciseaux supérieurs (9a, 9b) articulés côté supérieur sur ceux-ci, dans lequel, de préférence, ladite flèche (5) est disposée entre les deux branches de ciseaux (7) en position de travail.

3. Scie circulaire à berceau basculant selon la revendication 2, **caractérisée par le fait que** le dispositif d'arrêt (10, 19, 20, 21) présente un verrou d'arrêt (10), au moins sur une, de préférence sur chacune des branches de ciseaux (7), qui fixe les deux leviers de ciseaux inférieurs (8a, 8b) en position de travail et qui est reçu par ses deux extrémités respectivement sur un axe de verrou (19, 20) monté sur le levier de ciseaux inférieur (8a, 8b) associé.

4. Scie circulaire à berceau basculant selon la revendication 3, **caractérisée par le fait que** le premier axe de verrou (20) qui est associé à l'une des extrémités du verrou d'arrêt (10) est solidarisé au levier de ciseaux (8b) y présent, par exemple vissé ou soudé, et que le deuxième axe de verrou (19) qui est associé à l'autre extrémité du verrou d'arrêt (10) est détachable et est monté sur le levier de ciseaux (8a) y présent, par exemple en étant sécurisé par une goupille fendue de sécurité (21) contre le fait d'être retiré.

5. Scie circulaire à berceau basculant selon la revendication 4, **caractérisée par le fait que**, pour fixer le verrou d'arrêt (10) sur le deuxième axe de verrou (19) en position de travail, un palier d'axe pour le deuxième axe de verrou (19) est monté, par exemple, sur une patte sur le levier de ciseaux (8a) y présent, dans laquelle, pour fixer le verrou d'arrêt (10) sur le deuxième axe de verrou (19) en position de transport, un palier d'axe de transport (25) pour le deuxième axe de verrou (19) est monté, par exemple, sur une deuxième patte sur le levier de ciseaux (8a) y présent, de sorte que les deux leviers de ciseaux inférieurs (8a, 8b) peuvent être fixés au moyen du verrou d'arrêt (10) aussi bien en position de travail qu'en position de transport.

6. Scie circulaire à berceau basculant selon l'une quelconque des revendications précédentes, **caractérisée par le fait que** la flèche (5) comprend deux montants de flèche (14) qui sont reliés par au moins une barre transversale (15) et de préférence le canal de réception de produit de sciage (6).

7. Scie circulaire à berceau basculant selon l'une quelconque des revendications précédentes, **caractérisée par le fait qu'**au moins une tige d'amortissement (27) est montée sur la bascule (4), de préférence sur l'un des montants de flèche (14), à laquelle est associé un œil sur une patte (29) montée sur le bâti, de préférence sur l'un des leviers de ciseaux supérieurs (9a, 9b), qui est traversé par la tige d'amortissement (27) en position de travail et sur lequel s'appuie, à une extrémité, un ressort annulaire (26) placé autour de la tige d'amortissement (27), dans laquelle à l'autre extrémité du ressort annulaire (26) est associée une butée côté bascule, par exemple à l'extrémité côté bascule de la tige d'amortissement (27), de sorte que la bascule (4) et ainsi le canal de réception de produit de sciage (6) est précontraint(e) dans sa position de chargement de produit de sciage.

8. Scie circulaire à berceau basculant selon l'une quelconque des revendications 2 à 7, **caractérisée par le fait que** ledit ensemble de support (16, 17, 18) relie, avec un degré de liberté de rotation, la flèche (5) à deux leviers de ciseaux (8a) parallèles des quatre leviers de ciseaux inférieurs (8a, 8b), et comprend deux supports (16), en particulier deux rouleaux de support (16) faisant saillie vers l'intérieur sur lesquels repose la flèche (5) lorsque le canal de réception de produit de sciage (6) se trouve en position de chargement de produit de sciage.

9. Scie circulaire à berceau basculant selon l'une quelconque des revendications 2 à 8, **caractérisée par le fait que**, pour articuler la flèche (5) sur le bâti (1), l'ensemble de support (16, 17, 18) comprend deux entretoises de support de bascule (17) qui font chacune saillie vers le bas à partir des deux leviers de ciseaux inférieurs (8a) et qui portent chacune à leurs extrémités inférieures l'un des axes de support (18) sur lequel est articulé le montant de flèche (14) associé.

10. Scie circulaire à berceau basculant selon la revendication 8 ou 9, **caractérisée par le fait que** ledit ensemble de support (16, 17, 18) comprend deux axes de support de bascule (18) qui sont réalisés en tant que boulons à vis et sont chacun en saillie vers l'intérieur à partir de l'un des deux leviers de ciseaux inférieurs (8a) parallèles ou des entretoises de support de bascule (17) et y traversent chacun l'un des montants de flèche (14) de la flèche (5).

11. Scie circulaire à berceau basculant selon l'une quelconque des revendications précédentes, **caractérisée par le fait que** la lame de scie (2) est en saillie vers l'extérieur au-delà du bâti (1) sur un côté situé dans la direction d'axe de rotation, dans laquelle ledit mécanisme d'entraînement rotatif (3) est disposé au-dessus du bâti (1) sur le côté de la lame de scie (3), qui est tourné vers le bâti (1) dans la direction d'axe de rotation.

12. Scie circulaire à berceau basculant selon la revendication 11, **caractérisée par le fait qu'**un support moteur (12) portant le mécanisme d'entraînement rotatif (3) et la lame de scie (2) repose sur une traverse supérieure (11) du bâti (1) de sorte que l'axe de rotation de la lame de scie est située au-dessus de la traverse supérieure (11), dans laquelle le support moteur (12) comprend une ouverture d'insertion (30) pour insérer le montant de flèche (14) de la flèche (5), qui montre vers la lame de scie, lorsque la bascule (4) est placée sur le bâti (1) qui s'est replié dans la position de transport.

13. Scie circulaire à berceau basculant selon l'une quelconque des revendications précédentes, **caractérisée par le fait qu'**une couverture de lame de scie (2a) est montée autour de la lame de scie (2), laquelle est complétée par une gaine de couverture (2b) faisant saillie du canal de réception de produit de sciage (6) vers la lame de scie (2), pour obtenir une enceinte de lame de scie (2a, 2b) fermée complètement ou à peu près complètement, dans laquelle ladite gaine de couverture (2b) n'est pas en saillie vers le haut au-delà de la couverture de lame de scie (2a) lorsque la bascule (4) est placée sur le bâti (1) qui s'est replié dans la position de transport.

14. Scie circulaire à berceau basculant selon l'une quelconque des revendications 2 à 13, **caractérisée par le fait qu'**un élément de pied support (13) est monté à des extrémités inférieures des leviers de ciseaux inférieurs (8a) correspondants, situées sur un côté du bâti (1) qui montre dans la direction opposée au canal de réception de produit de sciage (6), ledit élément de pied support comprend une traverse s'étendant dans la direction d'axe de rotation et reliant les extrémités inférieures ainsi qu'une pluralité de pieds supports faisant saillie vers le bas à partir de celle-ci, dans laquelle la traverse fait saillie, du côté de la lame de scie (2), au-delà du bâti (1) et de préférence également de la lame de scie (2), et l'un des pieds supports est situé du côté de la lame de scie (2) qui montre dans la direction opposée au bâti (1).

15. Scie circulaire à berceau basculant selon l'une quelconque des revendications 2 à 13, **caractérisée par le fait que** des roues (13a) sont montées à des extrémités inférieures des leviers de ciseaux inférieurs (8b) correspondants, situées sur un côté du bâti (1) qui montre vers le canal de réception de produit de sciage (6), dans laquelle le levier de ciseaux inférieur (8b) situé du côté de la lame de scie (2) et portant l'une des roues (13a) est coudé vers l'extérieur de sorte que l'une des roues (13a) se trouve du côté de la lame de scie (2) qui montre dans la direction opposée au bâti (1).
